# EUROPÄISCHE PATENTSCHRIFT

(11) **EP 1 998 414 B1**
(45) Veröffentlichungstag und Bekanntmachung des Hinweises auf die Patenterteilung: **04.01.2017**
(21) Anmeldenummer: 08012255.9
(22) Anmeldetag: 19.10.2001
(51) Int. Cl.: G01N 27/28, H04B 5/00, H01R 13/66, H01F 38/14

(54) **Sensor, der über einen Steckverbinder mit Mitteln zur Realisierung einer kontaktlosen Signalübertragung an eine Übertragungsleitung anschliessbar ist**
Sensor which can be connected to a transfer circuit through a connector with means for realising contactless signal transfer
Capteur pouvant être connecté à une ligne de transmission à l'aide d'un connecteur à fiche équipé de moyens de réalisation d'une transmission de signal sans contact

(30) Priorität: 07.11.2000 DE 10055090
(43) Veröffentlichungstag der Anmeldung: 03.12.2008
(62) Teilanmeldung aus: 01124304.5
(73) Patentinhaber: Endress + Hauser Conducta GmbH+Co. KG, 70839 Gerlingen (DE)
(72) Erfinder: Pechstein, Torsten, Dr., 01445 Radebeul (DE); Scholz, Katrin, Dr., 09627 Bobritzsch (DE); Franzheld, Reiner, Dr., 04736 Waldheim (DE)
(74) Vertreter: Andres, Angelika Maria

(56) Entgegenhaltungen:
- EP-A1- 0 676 710
- EP-A1- 0 678 880
- EP-A2- 0 980 603
- DE-A1- 4 208 140
- DE-C1- 19 719 730

## Beschreibung

Die Erfindung betrifft einen Sensor der über einen Steckverbinder an eine Übertragungsleitung anschließbar ist. Weiterhin betrifft die vorliegende Erfindung betrifft einen Steckverbinder umfassend ein Steckerelement und ein mit dem Steckerelement lösbar verbindbares Buchsenelement, zum Anschluss einer Übertragungsleitung an mindestens einen Sensor. Weiterhin betrifft die Erfindung einen Sensor der über einen solchen Steckverbinder an einen Übertragungsleitung anschließbar ist.

Die Erfindung betrifft ausserdem ein Buchsenelement eines Steckverbinders, das mit einem Steckerelement des Steckverbinders lösbar verbindbar ist, wobei der Steckverbinder zum Anschluss einer Übertragungsleitung an mindestens einen Sensor dient.

Des Weiteren betrifft die vorliegende Erfindung ein Steckerelement eines Steckverbinders, das mit einem Buchsenelement des Steckverbinders lösbar verbindbar ist, wobei der Steckverbinder zum Anschluss einer Übertragungsleitung an mindestens einen Sensor dient.

Schliesslich betrifft die vorliegende Erfindung auch ein Verfahren zur Signalübertragung zwischen einem Steckerelement eines Steckverbinders und einem mit dem Steckerelement lösbar verbindbaren Buchsenelement des Steckverbinders, wobei mittels des Steckverbinders eine Übertragungsleitung an mindestens einen Sensor angeschlossen werden kann.

Das Steckerelement kann dem mindestens einen Sensor und das Buchsenelement der Übertragungsleitung zugeordnet sein. Alternativ kann der mindestens eine Sensor jedoch auch mit dem Buchsenelement versehen sein, wobei die Übertragungsleitung dann dem Steckerelement zugeordnet ist.

Die Übertragungsleitung, die über den Steckverbinder an den mindestens einen Sensor angeschlossen ist, dient zur Übertragung eines Messsignals von einem Sensor und/oder zur Übertragung eines Energieversorgungssignals für einen Sensor. Bei den aus dem Stand der Technik bekannten Steckverbindern werden die Messsignale und/oder die Energieversorgungssignale mittels einer elektrisch leitfähigen Verbindung zwischen dem Buchsenelement und dem Steckerelement über den Steckverbinder übertragen. Um eine elektrisch leitfähige Verbindung zwischen dem Buchsenelement und dem Steckerelement des Steckverbinders herstellen zu können, müssen an dem Buchsenelement und an dem Steckerelement elektrische Kontaktelemente aus einem elektrisch leitfähigen Material vorhanden sein, die bei miteinander verbundenem Buchsenelement und Steckerelement miteinander in Kontakt treten.

Insbesondere beim Einsatz eines Steckverbinders in einer feuchten oder chemisch aggressiven Umgebung, müssen hohe Anforderungen an den Steckverbinder hinsichtlich Dichtigkeit und elektrischer Isolationseigenschaften gestellt werden. Das Eindringen von Feuchtigkeit, Staub oder Schmutzpartikel und aggressiver Substanzen bspw. könnte zu einem Kurzschluss zwischen den elektrischen Kontaktelementen des Steckverbinders oder zu einer Korrosion der Kontaktelemente führen. Eine zuverlässige Messung durch Auswerten des Messsignals und/oder eine zuverlässige Versorgung des mindestens einen Sensors mit elektrischer Energie wird dadurch beeinträchtigt bzw. sogar unmöglich.

US-A-6071015 offenbart eine Anordnung umfassend ein Sensor und einen Steckverbinder nach dem Oberbegriff des Anspruchs 1.

Es ist deshalb die Aufgabe der vorliegenden Erfindung, eine Übertragungsleitung mittels eines Steckverbinders derart an mindestens einen Sensor anzuschliessen, dass Feuchtigkeit, Staub oder Schmutzpartikel und aggressive Substanzen, die Signalübertragungseigenschaften über den Steckverbinder nicht beeinträchtigen können.

Zur Lösung dieser Aufgabe schlägt die Erfindung ausgehend von dem Steckverbinder der eingangs genannten Art vor, dass der Steckverbinder Mittel zur Realisierung einer kontaktlosen Signalübertragung zwischen dem Steckerelement und dem Buchsenelement aufweist.

Die Erfindung offenbart einen Sensor, an welchen mittels eines Steckverbinders eine Übertragungsleitung anschließbar ist, wobei der Steckverbinder ein Steckerelement und ein mit dem Steckerelement lösbar verbindbares Buchsenelement, zum Anschluss der Übertragungsleitung an den Sensor aufweist,
das Steckerelement oder das Buchsenenelement mittels einer elektrischen Kontaktierung an den Sensor angeschlossen ist, und eine geeignete Abdichtung im Bereich des Anschlusses vorgesehen ist, um das Eindringen von Feuchtigkeit, Staub oder Schmutzpartikeln und ätzender Substanzen in den Bereich der elektrischen Kontaktierung zu verhindern,
die Übertragungsleitung an das jeweils andere Element des Steckverbinders mittels einer elektrischen Kontaktierung angeschlossen ist, und der Anschluss durch geeignete Mittel abgedichtet ist, um ein Eindringen von Feuchtigkeit, Staub oder Schmutzpartikeln und aggressiver oder ätzender Substanzen in den Bereich der elektrischen Kontaktierung zu verhindern.

Der erfindungsgemässe Steckverbinder kann zum Anschluss einer Übertragungsleitung an einen einzelnen Sensor oder an eine Messeinrichtung mit mehreren Sensoren eingesetzt werden. Über den Steckverbinder können ein Energieversorgungssignal an einen Sensor oder an eine Messeinrichtung mit mehreren Sensoren aber auch ein Messsignal von dem Sensor oder mehrere Messsignale von der Messeinrichtung übertragen werden. Der Steckverbinder kann für pH-, Druck-, Temperatur-, Trübungs-, Chlorid-, Sauerstoff-, Leitfähigkeits- und beliebig andere Sensoren eingesetzt werden.

Die kontaktlose Signalübertragung eine optische Signalübertragung.

Dazu müssen in dem Buchsenelement und dem Steckerelement des Steckverbinders geeignete Mittel zur Realisierung der entsprechenden kontaktlosen Signalübertragung vorhanden sein.

Das Steckerelement kann dem mindestens einen Sensor und das Buchsenelement der Übertragungsleitung zugeordnet sein. Alternativ kann der mindestens eine Sensor jedoch auch mit dem Buchsenelement versehen sein, wobei die Übertragungsleitung dann dem Steckerelement zugeordnet ist.

Zum Anschluss der Übertragungsleitung an den mindestens einen Sensor wird das Steckereelement in bekannter Weise in das Buchsenelement gesteckt. Bei zusammengestecktem Buchsenelement und Steckerelement kommt es jedoch nicht - wie beim Stand der Technik - zu einer elektrisch leitfähigen Verbindung zwischen Kontaktelementen des Buchsenelementes und Kontaktelementen des Steckerelementes. Vielmehr werden durch das Ineinanderstecken des Buchsenelements und des Steckerelements die Mittel zur Realisierung der kontaktlosen Signalübertragung in dem Buchsenelement und in dem Steckerelement in eine definierte Position relativ zueinander gebracht, so dass eine zuverlässige kontaktlose Signalübertragung über den Steckverbinder erfolgen kann.

Da keine elektrischen Kontaktelemente aus dem Buchsenelement und dem Steckerelement herausgeführt werden müssen, können das Buchsenelement und das Steckerelement nach aussen hin vollständig abgedichtet werden. Selbst wenn die Abdichtung zwischen dem Buchsenelement und dem Steckerelement das Eindringen von Feuchtigkeit, Staub oder Schmutzpartikel und aggressiver Substanzen nicht vollständig verhindern kann, können die eindringenden Substanzen nicht in das Buchsenelement selbst oder das Steckerelement selbst eindringen. Bei ineinandergestecktem Buchsenelement und Steckerelement kann sich zwischen dem Buchsenelement und dem Steckerelement ein Spalt bilden. In diesen Spalt eingedrungene Feuchtigkeit, Staub oder Schmutzpartikel und aggressive Substanzen haben nahezu keine Auswirkung auf das Signalübertragungsverhalten zwischen Buchsenelement und Steckerelement und beeinträchtigen die kontaktlose Signalübertragung nicht.

Mit dem erfindungsgemässen Steckverbinder kann also ein Anschluss einer Übertragungsleitung an mindestens einen Sensor realisiert werden, bei dem Feuchtigkeit, Staub oder Schmutzpartikel und aggressive Substanzen das Übertragungsverhalten nicht beeinträchtigen. Durch den erfindungsgemässen Steckverbinder können des Weiteren Leckströme zwischen dem mindestens einen Sensor und einem am Ende der Übertragungsleitung angeschlossenen Messumformer durch eine galvanische Trennung vermieden werden. Auf den Einsatz einer Potentialausgleichsleitung oder ähnlicher Mittel kann verzichtet werden. Ausserdem ist der erfindungsgemässe Steckverbinder besonders explosionsgeschützt. Ein weiterer Vorteil des erfindungsgemässen Steckverbinders ist die Möglichkeit einer homogenen, d.h. vollständig umschlossenen, Gestaltung des Stecker- und Buchsengehäuses. Dadurch kann eine höhere mechanische Festigkeit erzielt werden.

Gemäss einer Ausführungsform die nicht Teil der vorliegenden Erfindung ist, wird vorgeschlagen, dass das Steckerelement ein erstes Spulenelement mit einem ersten Teil eines Ferritkernübertragers und das Buchsenelement ein zweites Spulenelement mit einem zweiten Teil des Ferritkernübertragers aufweist. Die über den Steckverbinder zu übertragenden Messsignale oder Energieversorgungssignale werden mit bestimmten Frequenzen übertragen. Das Messsignal eines Sensors kann zunächst verstärkt und dann in ein frequenzanaloges Signal gewandelt werden. Das Messsignal wird dann mit einer bestimmten Frequenz induktiv zu der Übertragungsleitung und weiter zu dem Messumformer übertragen. Das Energieversorgungssignal kann ebenfalls mit einer bestimmten Frequenz über den Steckverbinder übertragen und zur Energieversorgung der Mittel zur Realisierung der induktiven Signalübertragung und des mindestens einen Sensors herangezogen werden. Das Kernmaterial und die Bauformen des Übertragers beeinflussen die Übertragungsleistung des Steckverbinders. Die Auswahl eines geeigneten Kernmaterials und einer geeigneten Bauform des Übertragers kann sensor- und anwendungsspezifisch und unter Kostengesichtspunkten getroffen werden.

Vorteilhafterweise ist in dem Steckerelement und in dem Buchsenelement jeweils mindestens ein Filter zur Trennung eines Messsignals von einem Sensor und eines Energieversorgungssignals für den oder jeden Sensor vorgesehen.

Gemäss der vorliegenden Erfindung wird vorgeschlagen, dass der Steckverbinder Mittel zur Realisierung einer optischen Signalübertragung zwischen dem Steckerelement und dem Buchsenelement aufweist. Die optische Signalübertragung kann in einem beliebigen Frequenzbereich - mit sichtbarem oder unsichtbarem Licht - erfolgen.

Gemäss einer bevorzugten Ausführungsform der vorliegenden Erfindung wird vorgeschlagen, dass das Steckerelement und das Buchsenelement Gehäusebereiche aus einem Material aufweisen, das zumindest für einen für die Signalübertragung relevanten Frequenzbereich optisch durchlässig ist.

Die optisch durchlässigen Bereiche sind vorteilhafterweise bei miteinander verbundenem Steckerelement und Buchsenelement einander zugewandt angeordnet. So können die optischen Signale zur Signalübertragung problemlos von dem Buchsenelement zu dem Steckerelement und umgekehrt übertragen werden.

Das Steckerelement weist vorzugsweise ein Sende- oder Empfangselement mindestens eines Optokopplers und das Buchsenelement ein dem Sende- oder Empfangselement zugeordnetes Empfangs- bzw. Sendeelement des mindestens einen Optokopplers auf.

Gemäss einer bevorzugten Ausführungsform der vorliegenden Erfindung wird vorgeschlagen, dass das dem oder jedem Sensor zugeordnete Steckerelement oder Buchsenelement einen Operationsverstärker aufweist. Der Operationsverstärker verstärkt das Messsignal des oder jeden Sensors bevor es über mittels der kontaktlosen Signalübertragung über den Steckverbinder übertragen wird.

Gemäss einer weiteren bevorzugten Ausführungsform der vorliegenden Erfindung wird vorgeschlagen, dass das dem oder jedem Sensor zugeordnete Steckerelement oder Buchsenelement einen spannungsgesteuerten Oszillator (VCO) zum Umwandeln eines Messsignals eines Sensors in ein frequenzanaloges Signal aufweist. Durch den spannungsgesteuerten Oszillator wird das Messsignal eines Sensors vor der kontaktlosen Signalübertragung in ein frequenzanaloges Signal gewandelt. Es wird also kein Spannungs-Messsignal, sondern das frequenzanaloge Signal übertragen, der wesentlich störunempfindlicher als das Spannungs-Messsignal ist.

Als eine weitere Lösung der Aufgabe der vorliegenden Erfindung wird ausgehend von dem Buchsenelement eines Steckverbinders der eingangs genannten Art vorgeschlagen, dass das Buchsenelement Mittel zur Realisierung einer kontaktlosen Signalübertragung zu dem Steckerelement aufweist, die mit entsprechenden Mitteln des Steckerelements zusammenwirken.

Gemäss einer anderen vorteilhaften Weiterbildung der vorliegenden Erfindung wird vorgeschlagen, dass das Buchsenelement Mittel zur Realisierung einer optischen Signalübertragung zu dem Steckerelement aufweist.

Als noch eine weitere Lösung der Aufgabe der vorliegenden Erfindung wird ausgehend von dem Steckerelement eines Steckverbinders der eingangs genannten Art vorgeschlagen, dass das Steckerelement Mittel zur Realisierung einer kontaktlosen Signalübertragung zu dem Buchsenelement aufweist, die mit entsprechenden Mitteln des Buchsenelements zusammenwirken.

Gemäss einer anderen vorteilhaften Weiterbildung der vorliegenden Erfindung wird vorgeschlagen, dass das Steckerelement Mittel zur Realisierung einer optischen Signalübertragung zu dem Buchsenelement aufweist.

Schliesslich wird zur Lösung der Aufgabe der vorliegenden Erfindung ausgehend von dem Verfahren zur Signalübertragung der eingangs genannten Art vorgeschlagen, dass die Signalübertragung zwischen dem Steckerelement und dem Buchsenelement kontaktlos realisiert wird.

Gemäss einer anderen vorteilhaften Weiterbildung der vorliegenden Erfindung wird vorgeschlagen, dass die Signalübertragung zwischen dem Steckerelement und dem Buchsenelement optisch realisiert wird.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
Figur 1 einen erfindungsgemässen Steckverbinder gemäss einer ersten bevorzugten Ausführungsform im Schnitt; und
Figur 2 einen erfindungsgemässen Steckverbinder gemäss einer zweiten bevorzugten Ausführungsform im Schnitt.

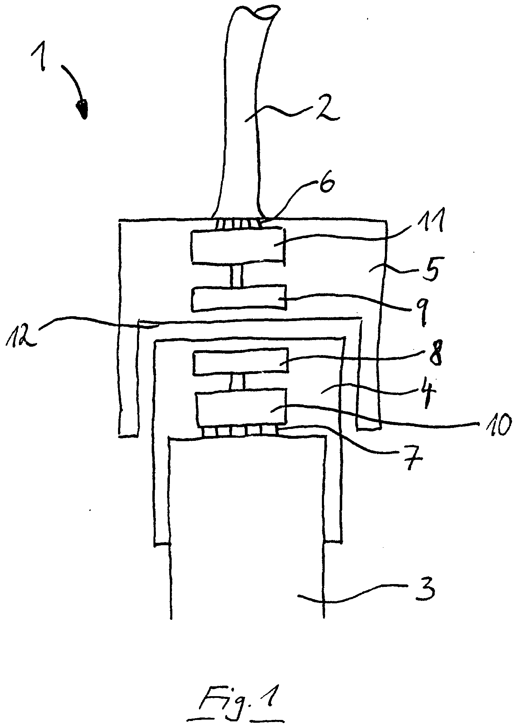

In Figur 1 ist ein Beispiel eines Steckverbinders in seiner Gesamtheit mit dem Bezugszeichen 1 bezeichnet. Der Steckverbinder 1 wird zum Anschluss einer Übertragungsleitung 2 an einen Sensor 3, bspw. einen prozessmesstechnischen Sensor zum Messen des pH-Werts, des Drucks, der Temperatur, der Trübung, des Chloridgehalts, des Sauerstoffgehalts oder der Leitfähigkeit eines Mediums, eingesetzt. Statt - wie in Figur 1 dargestellt - zum Anschluss von nur einem Sensor 3, kann der Steckverbinder 1 auch zum Anschluss mehrerer Sensoren verwendet werden, die zu einer gemeinsamen Messeinrichtung zusammengefasst sein können. Der Steckverbinder 1 umfasst ein Steckerelement 4 und ein mit dem Steckerelement 4 lösbar verbundenes Buchsenelement 5. Die Übertragungsleitung 2 ist an das Buchsenelement 5 mittels einer elektrischen Kontaktierung 6 angeschlossen. Der Anschluss ist durch geeignete Mittel abgedichtet, um ein Eindringen von Feuchtigkeit, Staub oder Schmutzpartikeln und aggressiver oder ätzender Substanzen in den Bereich der elektrischen Kontaktierung 6 zu verhindern. Die Übertragungsleitung 2 ist bspw. durch einen spritzgiesstechnischen Vergussvorgang an dem Buchsenelement 5 befestigt. Das Steckerelement 4 ist mittels einer elektrischen Kontaktierung 7 an den Sensor 3 angeschlossen. Es ist eine geeignete Abdichtung im Bereich des Anschlusses vorgesehen, um das Eindringen von Feuchtigkeit, Staub oder Schmutzpartikeln und ätzender Substanzen in den Bereich der elektrischen Kontaktierung 7 zu verhindern. Das Steckerelement 4 ist bspw. durch einen spritzgiesstechnischen Vergussvorgang an dem Sensor 3 befestigt.

Ein entscheidender Unterschied des erfindungsgemässen Steckverbinders 1 gegenüber den aus dem Stand der Technik bekannten Steckverbindern ist die kontaktlose Signalübertragung zwischen dem Steckerelement 4 und dem Buchsenelement 5. In dem Ausführungsbeispiel aus Figur 1 erfolgt die Signalübertragung auf induktivem Wege. Dazu umfasst das Steckerelement 4 ein erstes Spulenelement 8 mit einem ersten Teil eines Ferritkernübertragers. Das Buchsenelement 5 weist ein zweites Spulenelement 9 mit einem zweiten Teil des Ferritkernübertragers auf. Das erste Spulenelement 8 kann auch als die Primärseite eines Transformators und das zweite Spulenelement 9 als die Sekundärseite des Transformators betrachtet werden.

Über den Steckverbinder 1 können ein Energieversorgungssignal von einer Energiequelle zur Versorgung des Sensors 3 mit elektrischer Energie, aber auch Messsignale von dem Sensor 3 zu einem Messumformer übertragen werden. Die Energiequelle und der Messumformer sind mittels der Übertragungsleitung 2 an das Buchsenelement 5 angeschlossen, in Figur 1 jedoch nicht dargestellt. Zur Übertragung des Energieversorgungssignals wird das zweite Spulenelement 9 mit einer bestimmten Frequenz gespeist. Das Energieversorgungssignal wird mit dieser Frequenz an das erste Spulenelement 8 übertragen und dann gleichgerichtet. Zum Gleichrichten ist in dem Steckerelement 4 eine geeignete Elektronik 10 vorgesehen. Das gleichgerichtete Energieversorgungssignal dient als Versorgungsspannung für die steckerinterne Elektronik 10 und den Sensor 3.

Die steckerinterne Elektronik 10 umfasst ausserdem einen Operationsverstärker (nicht dargestellt), der ein Messsignal des Sensors 3 verstärkt. Der Operationsverstärker kann als Impedanzwandler mit einem Verstärkungsfaktor v = 1 ausgebildet sein. Des Weiteren umfasst die steckerinterne Elektronik 10 einen spannungsgesteuerten Osziallator (VCO oder V/F-Converter), durch den das Spannungs-Messsignal in ein frequenzanaloges Signal gewandelt wird. Die Frequenz dieses frequenzanalogen Signals ist abhängig von dem Spannungswert des Messsignals. Das frequenzanaloge Signal wird über dieselben Spulenelemente 8, 9 übertragen, die auch zur Übertragung des Energieversorgungssignals dienen. Zur Trennung des Messsignals von dem Energieversorgungssignal sind in der steckerinternen Elektronik 10 und in einer buchseninternen Elektronik 11 primär- und sekundärseitige Filter (nicht dargestellt) vorgesehen.

Bei miteinander verbundenem Steckerelement 4 und Buchsenelement 5 ist zwischen dem Steckerelement 4 und dem Buchsenelement 5 ein schmaler Spalt 12 vorhanden. Bei dem erfindungsgemässen Steckverbinder 1 müssen keine besondere Vorkehrungen getroffen werden, um den Spalt 12 abzudichten und das Eindringen von Feuchtigkeit, Staub oder Schmutzpartikeln und ätzender Substanzen zu verhindern. Anders als bei den aus dem Stand der Technik bekannten Steckverbindern, bei denen sich im Bereich des Spaltes elektrische Kontaktierungselemente befinden, die durch eindringene Substanzen kurzgeschlossen oder korrodiert werden können, haben die eindringenden Substanzen bei dem erfindungsgemässen Steckverbinder 1 keine Beeinträchtigung des Signalübertragungsverhaltens zwischen dem Steckerelement 4 und dem Buchsenelement 5 zur Folge. Ausserdem werden durch den erfindungsgemässen Steckverbinder 1 Leckströme zwischen dem Sensor 3 und dem Messumformer durch eine galvanische Trennung vermieden.

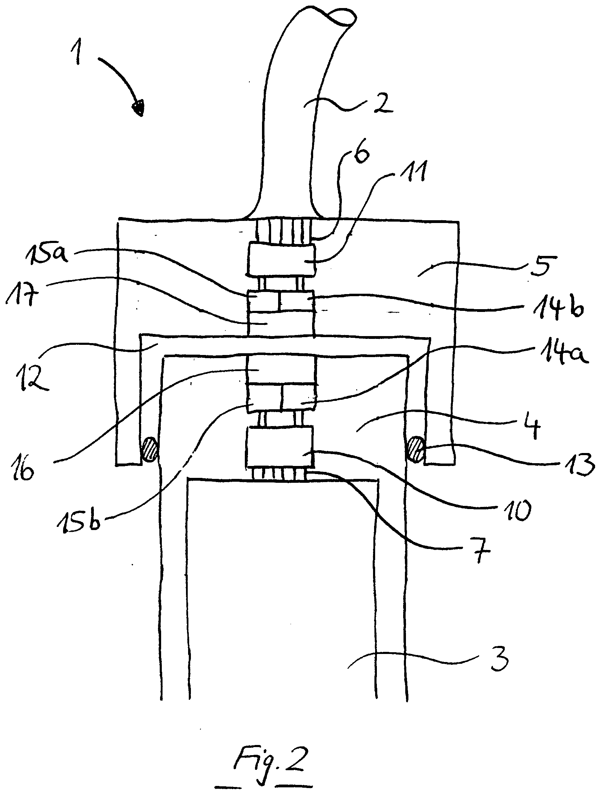

In Figur 2 ist ein Ausführungsbeispiel des erfindungsgemässen Steckverbinders 1 dargestellt. Der Steckverbinder 1 gemäss dem zweiten Ausführungsbeispiel unterscheidet sich von dem Steckverbinder 1 aus Figur 1 insbesondere dadurch, dass die kontaktlose Signalübertragung auf optischem Wege erfolgt. Des Weiteren ist der Spalt 12 zwischen dem Steckerelement 4 und dem Buchsenelement 5 durch geeignete Dichtungsmittel 13, bspw. einen Gummiring, abgedichtet, um das Eindringen von Feuchtigkeit, Staub oder Schmutzpartikel und ätzender Substanzen zu verhindern. Die Übertragungsleitung 2 ist durch eine mechanische Montage oder einen spritzgiesstechnischen Vergussvorgang an dem Buchsenelement 5 befestigt. Das Steckerelement 4 ist als integraler Bestandteil des Sensors 3 in dessen Gehäuse integriert.

Zur Realisierung der optischen Signalübertragung wird ein Optokoppler eingesetzt. Die optische Signalübertragung kann bei beliebigen Frequenzen erfolgen (z.B. mit UV-, IR- oder sichtbarem Licht). Um eine bidirektionale Signalübertragung realisieren zu können, weist das Steckerelement 4 ein Sendeelement 14a eines ersten Optokopplers 14 und ein Empfangselement 15b eines zweiten Optokopplers 15 auf. Das Buchsenelement 5 umfasst ein entsprechendes Empfangselement 14b des ersten Optokopplers 14 und ein Sendeelement 15a des zweiten Optokopplers 15. Das Steckerelement 4 und das Buchsenelement 5 weisen Gehäusebereiche 16, 17 auf, die aus einem Material bestehen, das zumindest für den für die Signalübertragung relevanten Frequenzbereich optisch durchlässig ist. Die optisch durchlässigen Gehäusebereiche 16, 17 bestehen bspw. aus einem transparenten Kunststoff, Plexiglas oder Glas. Es ist in Figur 2 deutlich zu erkennen, dass die optische durchlässigen Bereiche 16, 17 bei miteinander verbundenem Steckerelement 4 und Buchsenelement 5 einander zugewandt angeordnet sind.

Bei der optischen Signalübertragung wird die Energieversorgung des Sensors 3 nach wie vor induktiv oder kapazitiv erfolgen. Sollte es jedoch möglich sein, in dem kleinen Raum eines Steckerelements 4 oder Buchsenelements 5 Mittel zur Realisierung einer optischen Signalübertragung zu integrieren, die Signale mit einer ausreichend grossen Leistung übertragen können, steht einer Übertragung des Energieversorgungssignals auf optischem Wege nichts im Wege. Über die bidirektionale optische Verbindung können bspw. in der einen Richtung Ansteuersignale zur Steuerung bestimmter Sensorfunktionen an den Sensor 3 und in der anderen Richtung Messsignale von dem Sensor 3 übermittelt werden.

## Patentansprüche

1. Anordnung, umfassend ein Sensor (3) und einen Steckverbinder (1) mit einer Übertragungsleitung (2), die mittels des Steckverbinders (1) an den Sensor (3) anschließbar ist, wobei
der Steckverbinder (1) ein Steckerelement (4) und ein mit dem Steckerelement (4) lösbar verbindbares Buchsenelement (5), zum Anschluss der Übertragungsleitung (2) an den Sensor (3) aufweist,
das Steckerelement (4) oder das Buchsenenelement (5) mittels einer elektrischen Kontaktierung (7) an den Sensor (3) angeschlossen ist, und eine geeignete Abdichtung im Bereich des Anschlusses vorgesehen ist, um das Eindringen von Feuchtigkeit, Staub oder Schmutzpartikeln und ätzender Substanzen in den Bereich der elektrischen Kontaktierung (7) zu verhindern,
die Übertragungsleitung (2) mittels einer elektrischen Kontaktierung (6) an das Buchsenelement (5) bzw. an das Steckerelement (4) angeschlossen ist, und der Anschluss durch geeignete Mittel abgedichtet ist, um ein Eindringen von Feuchtigkeit, Staub oder Schmutzpartikeln und aggressiver oder ätzender Substanzen in den Bereich der elektrischen Kontaktierung (6) zu verhindern,
wobei der Steckverbinder (1) Mittel (10, 11, 14, 15) zur Realisierung einer optischen Signalübertragung zwischen dem Steckerelement (4) und dem Buchsenelement (5) aufweist,
**dadurch gekennzeichnet, dass** eine Energiequelle vorgesehen ist, die in der Lage ist ein Energieversorgungssignal zur Versorgung des Sensors (3) mit elektrischer Energie über den Steckverbinder (1) zu übertragen, wobei bei der optischen Signalübertragung eine Energieversorgung des Sensors (3) induktiv oder kapazitiv erfolgt.

2. Anordnung nach Anspruch 1, wobei das Steckerelement (4) und das Buchsenelement (5) Mittel zur Realisierung einer digitalen Signalübertragung zwischen dem Steckerelement (4) und dem Buchsenelement (5) aufweisen.

3. Anordnung nach Anspruch 1 oder 2, **dadurch gekennzeichnet, dass** der Sensor ein pH-, Druck-, Temperatur-, Trübungs-, Chlorid-, Sauerstoff-, oder Leitfähigkeitssensor ist.

## Claims

1. Arrangement, comprising a sensor (3) and a plug-in connector (1) with a transmission cable (2), which can be connected to the sensor (3) via the plug-in connector (1),
wherein
the plug-in connector (1) has a plug element (4) and a socket element (5) that can be detachably connected to the plug element (4) for the purpose of connecting the transmission cable (2) to the sensor (3),
wherein the plug element (4) or the socket element (5) is connected to the sensor (3) via an electrical contact (7), and wherein a suitable seal is provided in the area of the connection to prevent the penetration of moisture, dust or dirt articles and corrosive substances into the area of the electrical contact (7),
wherein the transmission cable (2) is connected to the socket element (5) or the plug element (4) via an electrical contact (6), and wherein the connection is sealed by suitable means in order to prevent the penetration of moisture, dust or dirt particles and aggressive or corrosive substances into the area of the electrical contact (6),
wherein the plug-in connector (1) has means (10, 11, 14, 15) to implement optical signal transmission between the plug element (4) and the socket element (5),
**characterized in that**
an energy source is provided which is able to transmit an energy supply signal, designed to supply electrical energy to the sensor (3), via the plug-in connector (1), the energy being supplied to the sensor (3) in an inductive or capacitive manner in the case of optical signal transmission.

2. Arrangement as claimed in Claim 1, wherein the plug element (4) and the socket element (5) have means to implement digital signal transmission between the plug element (4) and the socket element (5).

3. Arrangement as claimed in Claim 1 or 2, **characterized in that** the sensor is a pH, pressure, temperature, turbidity, chloride, oxygen or conductivity sensor.

## Revendications

1. Dispositif comprenant un capteur (3) et une connexion enfichable (1) avec un câble de transmission (2), qui peut être raccordé au capteur (3) au moyen de la connexion enfichable (1),
pour lequel la connexion enfichable (1) comporte un élément de connexion mâle (4) et un élément de connexion femelle (5) pouvant être relié de façon amovible avec l'élément de connexion mâle (4), éléments qui sont destinés au raccordement du câble de transmission (2) au capteur (3),
pour lequel l'élément de connexion mâle (4) ou l'élément de connexion femelle (5) est raccordé au capteur (5) au moyen d'une connexion électrique (7), et pour lequel est prévu un joint approprié dans la zone de raccordement afin d'empêcher l'infiltration d'humidité, de poussière, de particules de saletés et de substances corrosives dans la zone de la connexion électrique (7),
pour lequel le câble de transmission (2) est raccordé à l'élément de connexion femelle (5) ou à l'élément de connexion mâle (4) au moyen d'une connexion électrique (6), et pour lequel le raccordement est rendu étanche à l'aide de moyens appropriés afin d'empêcher l'infiltration d'humidité, de poussière, de particules de saletés et de substances agressives ou corrosives dans la zone de la connexion électrique (6),
pour lequel la connexion enfichable (1) présente des moyens (10, 11, 14, 15) destinés à la réalisation d'une transmission de signal optique entre l'élément de connexion mâle (4) et l'élément de connexion femelle (5),
**caractérisé**
**en ce qu'**est prévue une source d'énergie capable de transmettre un signal d'alimentation en énergie destiné à l'alimentation du capteur (3) en énergie électrique par l'intermédiaire de la connexion enfichable (1), l'alimentation en énergie du capteur étant effectuée de manière inductive ou capacitive dans le cadre de la transmission de signal optique.

2. Dispositif selon la revendication 1, pour lequel l'élément de connexion mâle (4) et l'élément de connexion femelle (5) comportent des moyens pour la réalisation d'une transmission de signal numérique entre l'élément de connexion mâle (4) et l'élément de connexion femelle (5).

3. Dispositif selon la revendication 1 ou 2, **caractérisé en ce que** le capteur est un capteur de pH, de pression, de température, de turbidité, de chlorure, d'oxygène ou de conductivité.
